# EUROPÄISCHE PATENTSCHRIFT

(11) **EP 0 652 619 B1**
(45) Veröffentlichungstag und Bekanntmachung des Hinweises auf die Patenterteilung: **07.05.1997**
(21) Anmeldenummer: 94117171.2
(22) Anmeldetag: 28.10.1994
(51) Int. Cl.: H02G 15/076, H02G 15/013

(54) **Haubenmuffe**
Sleeve provided with cap
Manchon à chapeau

(30) Priorität: 05.11.1993 DE 4337864
(43) Veröffentlichungstag der Anmeldung: 10.05.1995
(73) Patentinhaber: RXS Kabelgarnituren Gesellschaft mit beschränkter Haftung, D-58093 Hagen (DE)
(72) Erfinder: Meltsch, Hans-Jürgen, Dipl.-Ing., D-58239 Schwerte (DE); Fröhlich, Franz-Fr., Dipl.-Ing., D-58091 Hagen (DE); Zimmer, Rainer, Dipl.-Ing., D-58579 Schalksmühle (DE); Kluwe, Wolf, Dipl.-Ing., D-58119 Hagen (DE)
(74) Vertreter: Fuchs, Franz-Josef, Dr.-Ing.

(56) Entgegenhaltungen:
- EP-A- 0 120 541
- WO-A-92/22114
- CH-A- 455 908
- DE-A- 2 263 419
- DE-A- 2 456 471
- DE-A- 4 035 557

## Beschreibung

Die Erfindung betrifft eine Haubenmuffe, bestehend aus einem Haubenkörper und einem stirnseitigen Dichtungskörper mit Kabeleinlässen und einem ringförmigen Dichtungssystem zwischen dem Haubenkörper und dem Dichtungskörper, wobei eine Haltevorrichtung zur gegenseitigen Fixierung des Haubenkörpers und des Dichtungskörpers angeordnet ist, daß das Dichtungssystem umlaufend am Dichtungskörper angeordnet ist und aus einer im Volumen verringerbaren Dichtungsnut und einem in dieser Dichtungsnut eingelegten, elastischen Dichtungsring besteht und daß mindestens eine Nutwandung zur Verringerung des Nutvolumens durch Spannelemente so bewegbar ist, daß der Dichtungsring durch Verformung gegen die Innenwandung des Haubenkörpers dichtend angepreßt wird.

Eine Haubenmuffe dieser Art ist aus der deutschen Offenlegungsschrift 40 35 557 bekannt. Dort handelt es sich um einen Haubenkörper, der an seinem offenen Ende mit einem Dichtungskörper abgeschlossen wird. Dabei wird die Dichtung mit einem Dichtungssystem vorgenommen, bei dem der nötige Dichtungsdruck durch einen außen angesetzten Spannring erfolgt, der den Haubenkörper im Bereich der Dichtung von außen umspannt. Dieser Spannring enthält eine trapezförmige Nut, in der die Flansche des Haubenkörpers und des Dichtungskörpers umklammert werden. Durch Zusammenziehen des Spannrings werden die beiden Teile auf einem Dichtungsring zusammengepreßt. Hier ist die gegenseitige Fixierung von Haubenkörper und Dichtungskörper mit dem Dichtungssystem zusammengefaßt und erfordert somit einige Geschicklichkeit vom Monteur.

Weiterhin sind auch Dichtungssysteme bekannt, bei denen die Fixierung und gleichzeitige Abdichtung durch Einschrauben eines Dichtungskörpers in den Haubenkörper erfolgen. Doch ist hier nachteilig, daß die Dichtung bei dem Eindrehen einer nicht bestimmbaren Gleit- oder Schleifbewegung ausgesetzt wird, die unter Umständen zu Verspannungen im Dichtungssystem führen.

Aus der Patentschrift CH-A-455 908 ist eine Verbindungs- und Abzweigmuffe für Fernmeldekabel bekannt, die in den Kabeleinführungsbereichen eine Preßscheibe aufweist, die so bewegbar ist, daß das Volumen der umlaufenden Dichtungsnut verkleinert wird. Ein eingelegter elastischer Dichtungsring wird dabei dichtend gegen das umgehende Muffenrohr gepreßt, so daß die Abdichtung erfolgt.

Aus DE-A-24 56 471 ist eine Übergangsmuffe bekannt, die in den Kabeleinführungsbereichen einen Preßring enthält, durch den der eingelegte Dichtungsring ebenfalls gegen die umgebende Muffenwandung gepreßt wird.

Aus EP-A-0 120 541 ist eine Haubenmuffe bekannt, deren Dichtungskörper mit Hilfe eines Bajonettverschlusses mit Endanschlag am Haubenkörper befestigt wird, wobei entsprechende Dichtungen eingelegt sind.

Aufgabe der Erfindung ist nun, eine Haubenmuffe zu schaffen, bei der die Montage erleichtert wird und bei der während des Verschließvorganges keine Verspannungen im Dichtungssystem eintreten können. Die gestellte Aufgabe wird gemäß der Erfindung mit einer Haubenmuffe der eingangs erläuterten Art mit einer ersten Ausführungsform dadurch gelöst, daß die als Preßring ausgebildete bewegbare Nutwandung mittels spannender Kipphebel auf den umlaufenden Dichtungsring preßbar ist.

Die gestellte Aufgabe wird auch gelöst mit einer zweiten Ausführungsform mit den Merkmalen des Anspruches 2.

Weiterhin wird die Aufgabe mit einer dritten Ausführungsform mit den Merkmalen des Anspruchs 3 gelöst.

Ein großer Vorteil gegenüber dem Stand der Technik ist bei der Haubenmuffe gemäß der Erfindung darin zu sehen, daß bei der Montage zunächst die Fixierung zwischen dem Haubenkörper und dem Dichtungskörper hergestellt wird, so daß bereits vor der eigentlichen Abdichtung die Einzelteile positioniert sind. Erst anschließend erfolgt dann der Dichtungsvorgang, wobei die Dichtungseinlage in Form eines Dichtungsringes keiner Gleit- oder Schleifbewegung unterworfen wird. Dies begünstigt die Dichtungsverhältnisse und erleichtert die Montage wesentlich. Diese Vorteile liegen allen gezeigten Ausführungsbeispielen zugrunde, die stellvertretend für andere Möglichkeiten auf dieser Basis anzusehen sind. Die Erfindung wird nun anhand von drei Figuren näher erläutert:
- Figur 1: zeigt eine Ausführungsform, bei der die Verspannung des Dichtungsringes mittels eines umlaufenden Preßringes erfolgt.
- Figur 2: zeigt eine Ausführungsform, bei der der nötige Druck auf die Dichtungseinlage durch freigesetzte Federkraft erfolgt.
- Figur 3: zeigt eine Ausführungsform, bei der der nötige Druck auf den Dichtungsring durch Aufspreizung eines Spannringes erzeugt wird.

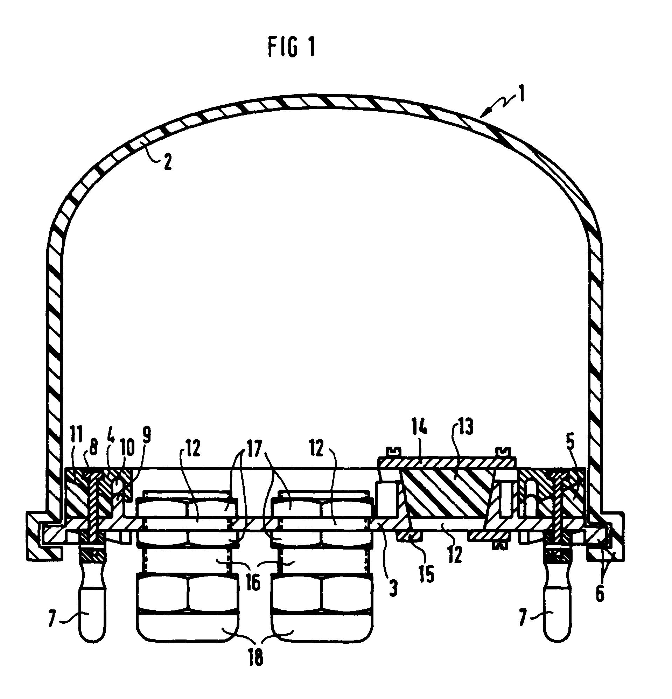

In Figur 1 wird eine Haubenmuffe 1 gemäß der Erfindung im Querschnitt gezeigt, wobei erkennbar wird, daß der Haubenkörper 2 vom Dichtungskörper 3 getrennt ist und daß diese beiden Teile über ein umlaufendes Fixiersystem 6 - das sich hier als eine umlaufende Nut des Haubenkörpers 2 mit einem darin eingeführten Rand des Dichtungskörpers 3 darstellt - miteinander verbunden und verkoppelt sind, ohne daß das Dichtungssystem mit dem Dichtungsring 5 zunächst beeinflußt ist. Diese Art Fixierung kann zum Beispiel über korrespondierende Stifte und Bohrungen, ineinander greifende Ausschnitte und Ansätze oder mittels eines Bajonettverschlusses erfolgen. Die letzte Ausführungsform ist in der Figur angedeutet. Bei all diesen Haltevorrichtungen werden in der Endlage entsprechende Rastungen vorgesehen, um ein unbeabsichtigtes Öffnen zu verhindern. Nachdem nun diese mechanische Fixierung vorgenommen ist, wird die Abdichtung zwischen dem Haubenkörper 2 und dem Dichtungskörper 3 vorgenommen. Das gegenseitige Dichtungssystem besteht aus einem umlaufenden Dichtungsring 5, der in einer umlaufenden Nut eingelegt ist. Das Volumen dieser Nut kann durch mindestens eine bewegliche Wandung verringert werden, so daß dadurch auf dem eingelegten Dichtungsring 5 ein Druck entsteht, wodurch das elastische Dichtungsmaterial verformt wird. Die Einzelheiten zur Abdichtung werden im folgenden beschrieben. Diese Nut wird nun vom Randbereich des Dichtungskörpers 5 und einem Preßring 4 als Nutwandungen gebildet. Außerdem ist der Preßring 4 als bewegliche Nutwandung ausgebildet und dieser wird zum Beispiel durch Umlegen von Kipphebeln 7 so gespannt und gegen den Dichtungskörper 3 gezogen, daß die Nutweite und damit das Nutvolumen verringert wird. Dies hat zur Folge, daß, wie oben bereits erwähnt, der eingelegte Dichtungsring 5 verpreßt und verformt wird und zwar so, daß er auf der Nutaußenseite gegen die Wandung des Haubenkörpers 2 dichtend gepreßt wird. Dabei wird auch der Nutgrund verändert, der durch einen Führungsring 9 des Dichtungskörpers 3 und eine konzentrisch verlaufende Nut 10 des Preßringes 4, in welche der Führungsring 9 eintaucht, gebildet wird. Die Flanke 11 des Preßringes 4 verläuft zweckmäßigerweise konisch erweitert nach auswärts, so daß die Verformung des Dichtungsringes 5 nach auswärts begünstigt wird. Die auf die Außenseite des Dichtungskörpers 3 hindurchgeführten Kipphebel 7 wirken mit Zugelementen 8 auf den Preßring 4 ein, wobei die Abdichtung der Durchführungsbohrungen für die Kipphebel 7 ebenfalls durch den Dichtungsring 5 abgedichtet werden. Eine andere und hier nicht dargestellte Lösung ist, den Preßring umlaufend auf der Außenseite des Dichtungskörpers anzuordnen, so daß die Durchführungen für die Kipphebel durch den Dichtungskörper nicht nötig sind. Im übrigen bleiben jedoch die Verhältnisse erhalten. Die Kipphebel 7 werden schließlich nach dem Betätigen in der Endlege arretiert, um unbeabsichtigtes Zurückklappen zu verhindern. Der Dichtungskörper 3 enthält verschiedene einführungsöffnungen 12, die in an sich bekannter Weise mit Kabeln versehen und abgedichtet werden. Stellvertretend hierfür werden zum Beispiel einschraubbare führungsstutzen 16 angegeben, die mittels Muttern 17 in den Kabeleinführungsöffnungen 12 dicht fixiert werden. Die freien Enden werden dann mit Abschlußkappen 18 in an sich bekannter Weise je nach Ausführung verschlossen. Eine andere Art der Abdichtung kann mit Hilfe von elastischen Dichtblöcken 13 erfolgen, die in vorzugsweise konisch verlaufenden Kabeleinführungsöffnungen 12 eingesetzt werden. Mit Hilfe von Preßringen 14 und 15 erfolgt dann die Verpressung des Dichtungsblockes 13 und schließlich die Abdichtung zum eingeführten Kabel. Der Dichtungskörper 3 kann bei allen Ausführungsformen kreisrund oder oval ausgebildet sein. Die ovale Ausführungsform eignet sich besonders für die Einführung von ungeschnittenen Lichtwellenleiter-Durchführungen, wobei der Abstand der einführungsöffnungen und die Ausbildung des Haubenkörpers so abgestimmt sein müssen, daß der minimal zulässige Krümmungsradius der Lichtwellenleiter nicht unterschritten wird. Außerdem muß dann eine Teilung des Dichtungskörpers durch die Einführungsöffnungen hindurch vorgesehen sein, um eine Durchführung von ungeschnittenen Kabeln ermöglichen zu können. Eine andere Möglichkeit ist, daß der Dichtungskörper von seinem äußeren Umfang her zugängliche beleinführungsöffnungen aufweist, die dann mit entsprechend geformten Dichtungsblöcken abgedichtet werden. Die Dichtblöcke müssen in diesen Fällen ebenfalls geschlitzt sein, damit die ungeschnittenen Kabel eingesetzt werden können.

Bisher wurde die Anwendung für eine Haubenmuffe beschrieben, die aus einer einseitig geschlossenen Haube besteht und die am offenen Ende mit dem beschriebenen Dichtungskörper abgeschlossen wird. Es ist jedoch auch möglich, ein Muffenrohr zu verwenden, das zum Haubenkörper durch Einsatz eines weiteren Dichtungskörpers der oben beschriebenen Art zum Haubenkörper gestaltet wird. Eine derartige Muffe kann dann auch als Durchgangsmuffe verwendet werden.

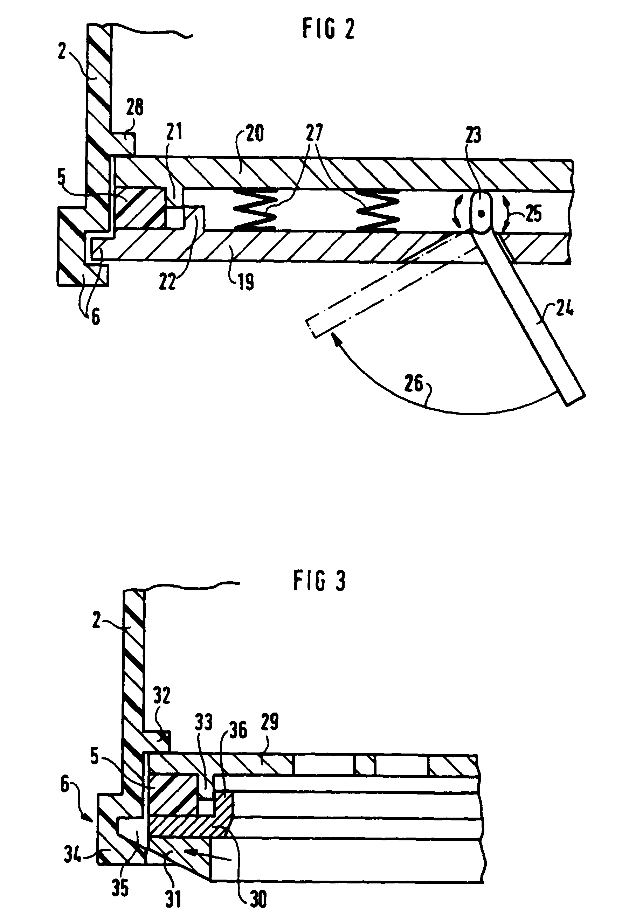

Figur 2 zeigt ein zweites Ausführungsbeispiel für eine Haubenmuffe gemäß der Erfindung, bei der ebenfalls die Trennung von mechanischer Fixierung und Abdichtung vorgenommen ist. Die mechanische Fixierung zwischen dem Haubenkörper 2 und dem Dichtungskörper 19 kann mit Haltevorrichtungen 6 in der bereits beschriebenen Weise ausgeführt werden. Die Abdichtung mit der im Volumen veränderbaren Nut und dem darin eingelegten Dichtungsring 5 erfolgt jedoch hier mit einer parallel zum Dichtungskörper 19 gehaltenen Preßscheibe 20 oder einem Ring. Zwischen dieser Preßscheibe 20 und dem Dichtungskörper 19 sind als Spannelemente Zugfedern 27 angeordnet, die im Einbauzustand mit Hilfe eines Spannelementes 23-24 gespreizt gehalten werden. Auf diese Weise ist eine umlaufende Nut mit zunächst großem Volumen gebildet und der eingelegte Dichtungsring 5 liegt darin entspannt. Die Kombination aus Dichtungskörper 19 und Preßscheibe 20 wird beim gegenseitigen mechanischen Fixieren bis zu einem inneren Anschlag 28 des Haubenkörpers 2 eingeführt, so daß die Einbaulage eindeutig bestimmt ist. Außerdem wird der Nutgrund der Dichtungsnut durch einen umlaufenden Führungsrand 22 und einen konzentrisch umlaufenden zweiten Führungsrand 21 der Preßscheibe 20 gebildet. Diese beiden konzentrischen Führungsränder 21 und 22 sind so versetzt, daß sie aneinander vorbeigleiten und somit den veränderlichen Nutgrund bilden. Nachdem die mechanische Einführung und Fixierung abgeschlossen ist, wird schließlich das die Spreizung der Zugfedern 27 bewirkende Spannelement 23-24 entsprechend der eingezeichneten Pfeile 25 und 26 umgelegt, wodurch die Federkraft freigegeben wird. Auf diese Weise erfolgt die Verengung der Dichtungsnut und der eingelegte Dichtungsring 5 wird wiederum gegen die Innenwandung des Haubenkörpers 2 dichtend gepreßt. Soll die Haubenmuffe wieder geöffnet werden, ist lediglich das Spannelement 23 und 24 zurückzulegen. Dadurch wird der Dichtungsring 5 entspannt und der Dichtungskörper kann entnommen werden.

Die Figur 3 zeigt ein Ausführungsbeispiel, bei dem die Veränderung des Nutgrundes der Dichtungsnut von außen her mit Hilfe eines als Spreizring 31 ausgebildeten Spannelementes erfolgt. Hier ist der eigentliche Dichtungskörper 29 nach innen bis zu einem Anschlag 32 des Haubenkörpers 2 eingeführt und ein nach auswärts gerichteter Führungsring 33 bildet zusammen mit dem Führungsring 36 des Preßringes 30 den Nutgrund der veränderbaren Dichtungsnut, in der wiederum ein umlaufender Dichtungsring 5 eingelegt ist. Die Verpressung wird hier mit einem Spreizring 31 vorgenommen, der außerhalb der Dichtungskörperanordnung auf den Preßring 30 aufliegend angeordnet ist. Die nach auswärts gerichtete Fläche des Spreizringes 31 fällt zur Wandung des Haubenkörpers 2 hin ab und taucht dann, wenn der Spreizring 31 aufgespreizt wird, in eine korrespondierende Ringnut 35 des Haubenkörpers 2 ein, deren Kontaktwandung ebenfalls schräg verlaufend ausgebildet ist. Infolge der durch den Pfeil angedeuteten Aufspreizung des Spreizringes 31 und durch den Schrägverlauf dieser Flächen wird in Achsrichtung auf den Preßring 30 eine Kraft ausgeübt, die zur Verengung der Dichtungsnut und zur Verpressung des Dichtungsringes 5 führt. So wird also auch hier der Dichtungsring 5 gegen die Innenwandung des Haubenkörpers 2 dichtend angepreßt. Die Haltevorrichtung für die gegenseitige mechanische Fixierung der einzelnen Teile kann wie bei den vorhergehenden Ausführungsbeispielen beibehalten werden.

Der bei allen Ausführungsbeispielen verwendete Dichtungsring 5 besteht aus gummielastischem Material, vorzugsweise aus Silikon oder EPDM.

## Patentansprüche

1. Haubenmuffe, bestehend aus einem Haubenkörper und einem stirnseitigen Dichtungskörper mit Kabeleinlässen und einem ringförmigen Dichtungssystem zwischen dem Haubenkörper und dem Dichtungskörper, wobei eine Haltevorrichtung (6) zur gegenseitigen Fixierung des Haubenkörpers (2) und des Dichtungskörpers (3, 19, 29) angeordnet ist, daß das Dichtungssystem umlaufend am Dichtungskörper (3, 19, 29) angeordnet ist und aus einer im Volumen verringerbaren Dichtungsnut und einem in dieser Dichtungsnut eingelegten, elastischen Dichtungsring (5) besteht und daß mindestens eine Nutwandung (4, 20, 30) zur Verringerung des Nutvolumens durch Spannelemente (7, 23-24) so bewegbar ist, daß der Dichtungsring (5) durch Verformung gegen die Innenwandung des Haubenkörpers (2) dichtend angepreßt wird,
**dadurch gekennzeichnet,**
daß die als Preßring (30) ausgebildete bewegbare Nutwandung mittels spannender Kipphebel (7) auf den umlaufenden Dichtungsring (5) preßbar ist.

2. Haubenmuffe, bestehend aus einem Haubenkörper und einem stirnseitigen Dichtungskörper mit Kabeleinlässen und einem ringförmigen Duchtungssystem zwischen dem Haubenkörper und dem Dichtungskörper, wobei eine Haltevorrichtung (6) zur gegenseitigen Fixierung des Haubenkörpers (2) und des Dichtungskörpers (3, 19, 29) angeordnet ist, daß das Dichtungssystem umlaufend am Dichtungskörper (3, 19, 29) angeordnet ist und aus einer im Volumen verringerbaren Dichtungsnut und einem in diesesr Dichtungsnut eingelegten, elastischen Dichtungsring (5) besteht und daß mindestens eine Nutwandung (4, 20, 30) zur Verringerung des Nutvolumens durch Spannelemente (7, 23-24) so bewegbar ist, daß der Dichtungsring (5) durch Verformung gegen die Innenwandung des Haubenkörpers (2) dichtend angepreßt wird,
**dadurch gekennzeichnet,**
daß eine Preßscheibe (20) als in Achsrichtung der Haubenmuffe (1) bewegliche Nutwandung im Abstand parallel zum scheibenförmigen Dichtungskörper (19) angeordnet ist, daß der Nutgrund durch konzentrisch umlaufende Führungsränder (21, 22) der Preßscheibe (20) und des Dichtungskörpers (19) gebildet ist, daß Zugfedern (27) zwischen der Preßscheibe (20) und im Dichtungskörper (19) angeordnet sind und daß mindestens ein die Spreizung der Zugfedern (27) bewirkendes Spannelement (23-24) zwischen der Preßscheibe (20) und dem Dichtungskörper (19) angeordnet ist.

3. Haubenmuffe, bestehend aus einem Haubenkörper und einem stirnseitigen Dichtungskörper mit Kabeleinlässen und einem ringförmigen Dichtungssystem zwischen dem Haubenkörper und dem Dichtungskörper, wobei eine Haltevorrichtung (6) zur gegenseitigen Fixierung des Haubenkörpers (2) und des Dichtungskörpers (3, 19, 29) angeordnet ist, daß das Dichtungssystem umlaufend am Dichtungskörper (3, 19, 29) angeordnet ist und aus einer im Volumen verringerbaren Dichtungsnut und einem in dieser Dichtungsnut eingelegten, elastischen Dichtungsring (5) besteht und daß mindestens eine Nutwandung (4, 20, 30) zur Verringerung des Nutvolumens durch Spannelemente (7, 23-24) so bewegbar ist, daß der Dichtungsring (5) durch Verformung gegen die Innenwandung des Haubenkörpers (2) dichtend angepreßt wird,
**dadurch gekennzeichnet,**
daß ein in Achsrichtung der Haubenmuffe (1) beweglicher Preßring (30) mit einem Führungsring (36) versehen ist, der mit einem konzentrischen Führungsring (33) des Dichtungskörpers (29) den Nutgrund der mit dem Dichtungsring (5) belegten umlaufenden Dichtungsnut bildet, daß ein als Spannelement ausgebildeter Spreizring (31) mit konischer Flanke in eine korrespondierende, konisch angepaßte Ringnut (35) des Haubenkörpers (2) ausspreizbar ist, wodurch der Preßring (30) gegen den am Dichtungskörper (29) anliegenden Dichtungsring (5) preßbar und zum Haubenkörper (2) hin ausformbar ist.

4. Haubenmuffe nach einem der Ansprüche 1 - 3,
**dadurch gekennzeichnet,**
daß die Haltevorrichtung (6) durch gegenseitig ineinander wirkende Ansätze und Ausschnitte des Haubenkörpers (2) und des Dichtungskörpers (3, 19, 29) gebildet sind.

5. Haubenmuffe nach einem der Ansprüche 1 - 3,
**dadurch gekennzeichnet,**
daß die Haltevorrichtung (6) als Bajonettverschluß ausgebildet ist.

6. Haubenmuffe nach einem der vorhergehenden Ansprüche,
**dadurch gekennzeichnet,**
daß bei der Haltevorrichtung (6) eine Rastung in der Endstellung vorgesehen ist.

7. Haubenbmuffe nach einem der vorhergehenden Ansprüche,
**dadurch gekennzeichnet,**
daß der Dichtungsring (5) aus gummielastischem Material, vorzugsweise z.B. aus Silikon oder EPDM besteht.

8. Haubenbmuffe nach einem der vorhergehenden Ansprüche,
**dadurch gekennzeichnet,**
daß das Spannelement (4, 20, 30) auf der nach innen gerichteten Seite des Dichtungskörpers (3, 19, 29) angeordnet ist.

9. Haubenmuffe nach einem der Ansprüche 1 bis 7,
**dadurch gekennzeichnet,**
daß das Spannelement (4, 20, 30) auf der nach außen gerichteten Seite des Dichtungskörpers (3, 19,219) angeordnet ist.

10. Haubenmuffe nach einem der vorhergehenden Ansprüche,
**dadurch gekennzeichnet,**
daß der Dichtungskörper (3, 19, 20) kreisförmig ausgebildet ist.

11. Haubenmuffe nach einem der Ansprüche 1 bis 9,
**dadurch gekennzeichnet,**
daß der Dichtungskörper (3, 19, 20) oval ausgebildetist.

12. Haubenmuffe nach einem der vorhergehenden Ansprüche,
**dadurch gekennzeichnet,**
daß in den Kabeleinführungsöffnungen (12) Dichtblöcke (13) aus elastischem Material angeordnet sind und daß Preßelemente, vorzugsweise Preßringe (14) zur Kompression der Dichtblöcke (13) zumindest auf einer Seite des Dichtungskörpers (3, 19, 29) angeordnet sind.

13. Haubenmuffe nach Anspruch 12,
**dadurch gekennzeichnet,**
daß die Kabeleinführungsöffnungen (12) konisch ausgeformt sind.

14. Haubenmuffe nach einem der Ansprüche 1 bis 11,
**dadurch gekennzeichnet,**
daß Einführungsstutzen (16), vorzugsweise schraubbar, in den Kabeleinführungsöffnungen (12) angeordnet sind.

15. Haubenmuffe nach Anspruch 14,
**dadurch gekennzeichnet,**
daß die Einführungsstutzen (16) mit Abschlußkappen (18) versehen sind.

16. Haubenmuffe nach einem der vorhergehenden Ansprpüche,
**dadurch gekennzeichnet,**
daß der Dichtungsskörper (3, 19, 29) so geteilt ist, daß die Trennlinie durch die Einführungsöffnungen (12) führt.

17. Haubenmuffe nach einem der vorhergehenden Ansprüche,
**dadurch gekennzeichnet,**
daß der Dichtungskörper (3, 19, 29)vom Rand ausgehende Kabeleinführungsöffnungen (12) aufweist.

18. Haubenmuffe nach Anspruch 12,
**dadurch gekennzeichnet,**
daß die Dichtblöcke (13) geschlitzt sind.

19. Haubenmuffe nach einem der vorhergehenden Ansprüche,
**dadurch gekennzeichnet,**
daß der Haubenkörper (2) aus einem zylindrischen Muffenrohr und einem weiteren Dichtungskörper (2, 19, 29) gebildet ist.

## Claims

1. Hood sleeve, comprising a hood body and a sealing body at the ends having cable inlets and an annular sealing system between the hood body and the sealing body, a holding device (6) for the mutual fixing of the hood body (2) and of the sealing body (3, 19, 29) being arranged such that the sealing system is arranged circumferentially on the sealing body (3, 19, 29) and comprises a sealing groove, which can be reduced in volume, and an elastic sealing ring (5) which is inserted into this sealing groove, and such that at least one groove wall (4, 20, 30) for reducing the groove volume by means of clamping elements (7, 23-24) can be moved in such a way that the sealing ring (5) is pressed in a sealing manner by means of deformation against the inner wall of the hood body (2),
characterized in that
the moveable groove wall, designed as a press ring (30) may be pressed onto the circumferential sealing ring (5) by means of clamping tilting levers (7).

2. Hood sleeve, comprising a hood body and a sealing body at the ends having cable inlets and an annular sealing system between the hood body and the sealing body, a holding device (6) for the mutual fixing of the hood body (2) and of the sealing body (3, 19, 29) being arranged such that the sealing system is arranged circumferentially on the sealing body (3, 19, 29) and comprises a sealing groove, which can be reduced in volume, and an elastic sealing ring (5) which is inserted into this sealing groove, and such that at least one groove wall (4, 20, 30) for reducing the groove volume by means of clamping elements (7, 23-24) can be moved in such a way that the sealing ring (5) is pressed in a sealing manner by means of deformation against the inner wall of the hood body (2),
characterized in that
a pressure disc (20) is arranged, as a groove wall which can move in the axial direction of the hood sleeve (1), at a distance from and parallel to the disc-shaped sealing body (19), in that the bottom of the groove is formed by concentrically circumferential guide edges (21, 22) of the pressure disc (20) and of the sealing body (19), in that tension springs (27) are arranged between the pressure disc (20) and the sealing body (19), and in that at least one clamping element (23-24), effecting the spreading of the tension springs (27), is arranged between the pressure disc (20) and the sealing body (19).

3. Hood sleeve, comprising a hood body and a sealing body at the ends having cable inlets and an annular sealing system between the hood body and the sealing body, a holding device (6) for the mutual fixing of the hood body (2) and of the sealing body (3, 19, 29) being arranged such that the sealing system is arranged circumferentially on the sealing body (3, 19, 29) and comprises a sealing groove, which can be reduced in volume, and an elastic sealing ring (5) which is inserted into this sealing groove, and such that at least one groove wall (4, 20, 30) for reducing the groove volume by means of clamping elements (7, 23-24) can be moved in such a way that the sealing ring (5) is pressed in a sealing manner by means of deformation against the inner wall of the hood body (2),
characterized in that
a pressure ring (30), which can move in the axial direction of the hood sleeve (1), is provided with a guide ring (36) which, with a concentric guide ring (33) of the sealing body (29) forms the bottom of the groove of the circumferential sealing groove occupied by the sealing ring (5) in that a spreader ring (31), designed as a clamping element and having a conical flank, can be spread out in a corresponding, conically matched annular groove (35) of the hood body (2), as a result of which the pressure ring (30) can be pressed against the sealing ring (5) resting on the sealing body (29) and can be shaped towards the hood body (2).

4. Hood sleeve according to one of Claims 1 to 3,
characterized in that
the holding device (6) is formed by catches and cut-outs, acting mutually in one another, of the hood body (2) and of the sealing body (3, 19, 29).

5. Hood sleeve according to one of Claims 1 - 3,
characterized in that,
the holding device (6) is designed as a bayonet closure.

6. Hood sleeve according to one of the preceding claims,
characterized in that,
in the holding device (6), a latching means in the end position is provided.

7. Hood sleeve according to one of the preceding claims,
characterized in that,
the sealing ring (5) is composed of rubber-elastic material, preferably, for example, of silicon or EPDM.

8. Hood sleeve according to one of the preceding claims,
characterized in that,
the clamping element (4, 20, 30) is arranged on the inwardly directed side of the sealing body (3, 19, 29).

9. Hood sleeve according to one of Claims 1 to 7,
characterized in that,
the clamping element (4, 20, 30) is arranged on the outwardly directed side of the sealing body (3, 19, 29).

10. Hood sleeve according to one of the preceding claims,
characterized in that,
the sealing body (3, 19, 20) is of circular design.

11. Hood sleeve according to one of Claims 1 to 9,
characterized in that,
the sealing body (3, 19, 20) is of oval design.

12. Hood sleeve according to one of the preceding claims,
characterized in that,
sealing blocks (13) of elastic material are arranged in the cable entry openings (12), and in that pressure elements, preferably pressure rings (14) for the compression of the sealing blocks (13) are arranged at least on one side of the sealing body (3, 19, 29).

13. Hood sleeve according to Claim 12,
characterized in that,
the cable entry openings (12) are conically moulded.

14. Hood sleeve according to one of Claims 1 to 11,
characterized in that,
entry glands (16) are arranged, preferably in a screwable manner, in the cable entry openings (12).

15. Hood sleeve according to Claim 14,
characterized in that,
the entry glands (16) are provided with terminating caps (18).

16. Hood sleeve according to one of the preceding claims,
characterized in that,
the sealing body (3, 19, 29) is split in such a way that the parting line leads through the entry openings (12).

17. Hood sleeve according to one of the preceding claims,
characterized in that,
the sealing body (3, 19, 29) has cable entry openings (12) proceeding from the edge.

18. Hood sleeve according to Claim 12,
characterized in that,
the sealing blocks (13) are slotted.

19. Hood sleeve according to one of the preceding claims,
characterized in that,
the hood body (2) is formed from a cylindrical sleeve pipe and a further sealing body (2, 19, 29).

## Revendications

1. Manchon à chapeau constitué d'un élément de chapeau et d'un élément frontal d'étanchéité, comportant des entrées de câbles et un système d'étanchéité annulaire entre l'élément de chapeau et l'élément d'étanchéité, un dispositif (6) de maintien servant à immobiliser mutuellement l'élément (2) de chapeau et l'élément (3, 19, 29) d'étanchéité étant disposé de manière que le système d'étanchéité soit monté tout autour de l'élément (3, 19; 29) d'étanchéité et consistant en une gorge d'étanchéité dont le volume peut être réduit et en une bague (5) d'étanchéité élastique introduite dans cette gorge d'étanchéité, et de manière qu'au moins une paroi (4, 20, 30) de la gorge servant à réduire le volume de la gorge puisse être déplacée par des éléments (7, 23-24) de blocage de manière que la bague (5) d'étanchéité puisse être pressée de manière étanche par déformation sur la paroi intérieure de l'élément (2) de chapeau, caractérisé en ce que la paroi de gorge mobile réalisée en bague (30) de pression peut, au moyen de leviers (7) basculants de placage, être pressée sur la bague (5) d'étanchéité qui fait le tour.

2. Manchon à chapeau constitué d'un élément de chapeau et d'un élément frontal d'étanchéité, comportant des entrées de câbles et un système d'étanchéité annulaire entre l'élément de chapeau et l'élément d'étanchéité, un dispositif (6) de maintien servant à immobiliser mutuellement l'élément (2) de chapeau et l'élément (3, 19, 29) d'étanchéité étant disposé de manière que le système d'étanchéité soit monté tout autour de l'élément (3, 19; 29) d'étanchéité et consistant en une gorge d'étanchéité dont le volume peut être réduit et en une bague (5) d'étanchéité élastique introduite dans cette gorge d'étanchéité, et de manière qu'au moins une paroi (4, 20, 30) de la gorge servant à réduire le volume de la gorge puisse être déplacée par des éléments (7, 23-24) de blocage de manière que la bague (5) d'étanchéité puisse être pressée de manière étanche par déformation sur la paroi intérieure de l'élément (2) de chapeau, caractérisé en ce qu'une rondelle (20) de pression est montée, comme paroi de gorge mobile dans la direction axiale du manchon (1) à chapeau, à distance parallèlement de l'élément (19) d'étanchéité en forme de rondelle et parallèlement à lui, en ce que le fond de la gorge est formé par des bords (21, 22) de guidage de la rondelle (20) de pression et de l'élément (19) d'étanchéité qui font tout le tour concentriquement, en ce que des ressorts (27) de traction sont montés entre la rondelle (20) de pression et l'élément (19) d'étanchéité et en ce qu'au moins un élément (23-24) de blocage provoquant l'écartement des ressorts (27) de traction est monté entre la rondelle (20) de pression et l'élément (19) d'étanchéité.

3. Manchon à chapeau constitué d'un élément de chapeau et d'un élément frontal d'étanchéité, comportant des entrées de câbles et un système d'étanchéité annulaire entre l'élément de chapeau et l'élément d'étanchéité, un dispositif (6) de maintien servant à immobiliser mutuellement l'élément (2) de chapeau et l'élément (3, 19, 29) d'étanchéité étant disposé de manière que le système d'étanchéité soit monté tout autour de l'élément (3, 19; 29) d'étanchéité et consistant en une gorge d'étanchéité dont le volume peut être réduit et en une bague (5) d'étanchéité élastique introduite dans cette gorge d'étanchéité, et de manière qu'au moins une paroi (4, 20, 30) de la gorge servant à réduire le volume de la gorge puisse être déplacée par des éléments (7, 23-24) de blocage de manière que la bague (5) d'étanchéité puisse être pressée de manière étanche par déformation sur la paroi intérieure de l'élément (2) de chapeau, caractérisé en ce qu'une bague (30) de pression mobile dans la direction axiale du manchon (1) est munie d'une bague (36) de guidage qui forme, conjointement avec une bague (33) de guidage concentrique de l'élément (29) d'étanchéité, le fond de la gorge d'étanchéité qui fait tout le tour et qui est occupé par la bague (5) d'étanchéité, en ce qu'une bague (31) d'écartement réalisée en élément de blocage et ayant un flanc conique peut s'élargir dans une rainure (35) de l'élément (2) de chapeau annulaire correspondante, adaptée de manière conique, ce qui fait que la bague (30) de pression peut être pressée sur la bague (5) d'étanchéité s'appliquant à l'élément (29) d'étanchéité et peut être déformée en direction de l'élément (2) de chapeau.

4. Manchon à chapeau suivant l'une des revendications 1 à 3, caractérisé en ce que le dispositif (6) de maintien est formé par des tenons et des mortaises de l'élément (2) de chapeau et de l'élément (3, 19, 29) d'étanchéité qui s'interpénètrent mutuellement.

5. Manchon à chapeau suivant l'une des revendications 1 à 3, caractérisé en ce que le dispositif (6) de maintien est réalisé en fermeture à baïonnette.

6. Manchon à chapeau suivant l'une des revendications précédentes, caractérisé en ce qu'il est prévu pour le dispositif (6) de maintien un encliquetage en la position d'extrémité.

7. Manchon à chapeau suivant l'une des revendications précédentes, caractérisé en ce que la bague (5) d'étanchéité est en un matériau plastique élastomère, de préférence en silicone ou en EPDM.

8. Manchon à chapeau suivant l'une des revendications précédentes, caractérisé en ce que l'élément (4, 20, 30) de blocage est monté du côté de l'élément (3, 19, 29) d'étanchéité dirigé vers l'intérieur

9. Manchon à chapeau suivant l'une des revendications précédentes, caractérisé en ce que l'élément (4, 20, 30) de blocage est monté du côté de l'élément (3, 19, 29) d'étanchéité dirigé vers l'extérieur.

10. Manchon à chapeau suivant l'une des revendications précédentes, caractérisé en ce que l'élément (3, 19, 29) d'étanchéité est de forme circulaire.

11. Manchon à chapeau suivant l'une des revendications précédentes, caractérisé en ce que l'élément (3, 19, 29) d'étanchéité est de forme ovale.

12. Manchon à chapeau suivant l'une des revendications précédentes, caractérisé en ce qu'il est monté dans les ouvertures (12) d'introduction de câbles des pièces (13) d'étanchéité en matériau élastique et en ce que des éléments d'application d'une pression, de préférence des bagues (14) de pression, servant à comprimer les pièces (13) d'étanchéité sont montés au moins d'un côté de l'élément (3, 19, 29) d'étanchéité.

13. Manchon à chapeau suivant la revendication 12, caractérisé en ce que les ouvertures (12) d'introduction de câbles sont de forme conique.

14. Manchon à chapeau suivant l'une des revendications 1 à 11, caractérisé en ce qu'il est monté, de préférence vissé, des embouts (156) d'introduction dans ouvertures (12) d'introduction de câbles.

15. Manchon à chapeau suivant la revendication 12, caractérisé en ce que les embouts (156) d'introduction sont munis de capuchons (18) de fermeture.

16. Manchon à chapeau suivant l'une des revendications précédentes, caractérisé en ce que l'élément (3, 19, 29) d'étanchéité est divisé de manière que la ligne de joint passe par les ouvertures (12) d'introduction de câbles.

17. Manchon à chapeau suivant l'une des revendications précédentes, caractérisé en ce que l'élément (3, 19, 29) d'étanchéité comporte des ouvertures (12) d'introduction de câbles partant du bord

18. Manchon à chapeau suivant la revendication 13, caractérisé en ce que les blocs (13) d'étanchéité sont fendus.

19. Manchon à chapeau suivant l'une des revendications précédentes, caractérisé en ce que l'élément (2) de chapeau est formé par un tube de manchon cylindrique et par un autre élément d'étanchéité (3, 19, 39).
